# EUROPEAN PATENT APPLICATION

(11) **EP 1 715 691 A1**
(43) Date of publication of application: **25.10.2006**
(21) Application number: 05709789.1
(22) Date of filing: 04.02.2005
(51) Int. Cl.: H04N 7/14, H04M 3/00, H04M 11/00

(54) **VIDEOPHONE SYSTEM, SELF-SUPPORT BASE STATION DEVICE, SET TOP BOX, AND VIDEOPHONE METHOD**

(30) Priority: 06.02.2004 JP 2004031262
(71) Applicant: Softbank BB Corp., Tokyo 105-7304 (JP)
(72) Inventor: SON, Masayoshi, Tokyo (JP)
(74) Representative: Grünecker, Kinkeldey, Stockmair & Schwanhäusser Anwaltssozietät
(86) International application number: PCT/JP2005/001724
(87) International publication number: WO 2005/076615

(57) **Abstract**

A video phone system includes: a mobile communication terminal 90u having a function for transmitting/receiving imaged moving picture to/from a radio communication base station and performing communication; and a monitor device 44 for displaying a moving picture transmitted/received to/from a radio communication base station 3B by using a communication protocol between the radio communication base station 3B and the mobile communication terminal 90u. Thus, it is possible to perform high-image-quality videophone communication by using a camera arranged at a mobile communication terminal such as a mobile telephone, PHS, and PDA.

## Description

### Field Of The Invention

The present invention relates to a video phone system, a self-support base station device, a set-top box and a video phone method in which the capability for transmitting and receiving moving pictures, which are imaged, to a radio communication base station are provided by the use of a mobile communication terminal such as a mobile telephone, a PHS terminal or a PDA.

### Background Art

In recent years, the mobile communication terminals such as mobile telephones and PHS terminals capable of imaging moving pictures (movies) have widely been distributed to enable a so - called video phone communication by transmitting and receiving moving pictures and performing a telephone conversation at the same time (for example, as described in Japanese Patent Published Application No. 2004-7537).

This video phone communication is performed by capturing the image of a user with a camera which is implemented within a mobile communication terminal, transmitting and receiving voice data and moving picture data through a relay server in accordance with a predetermined protocol between a radio communication base station and the mobile communication terminal, and displaying moving pictures, which is received, on the monitor provided within a mobile communication terminal such as a liquid crystal display.

### Summary of The Invention

However, since the portability is becoming more important in the mobile communication terminal, there is a problem that it is difficult to realize high - quality images for video phone communication because of the limitations on the resolution and the size of the monitor.

On the other hand, in recent years, IP telephone services using the so -called VOIP technique have widely been distributed, and these IP telephone services are becoming low priced or free of charge. However, in the case where the video phone communication is realized by using the VOIP technique, if VOIP functionality is implemented within a mobile communication terminal, the complexity and the size of the system tend to be increased so that the production cost of the system may be increased.

Furthermore, generally speaking, the mobile communication terminal must periodically be recharged, for example, by mounting the mobile communication terminal on a battery charger so that it cannot be carried during charging, and thereby the portability is not important for use during charging so that it is possible to design a system making use of a peripheral device.

Accordingly, taking into consideration the above circumstances, it is a challenge of the present invention to provide a video phone system, a self-support base station device, a set-top box and a video phone method in which video phone communication through high - quality images can be performed by the use of a camera which is provided of a mobile communication terminal such as a mobile telephone, a PHS or a PDA.

In order to accomplish the object as described above, the present invention comprises: a mobile communication terminal having a capability of performing the transmission and reception of moving pictures, which are captured, and a conversation with a radio communication base station; a self-support base station device operable to receive the moving pictures transmitted to and received from the radio communication base station on the basis of a communication protocol which is used between the radio communication base station and the mobile communication terminal; and a monitor device operable to display the moving pictures received by the self-support base station device.

In accordance with the present invention as described above, it is possible to output the moving pictures transmitted and received between the mobile communication terminal and the radio communication base station to a television receiver or the monitor device of a personal computer and the like through the self-support base station device, and realize a video phone system with a high - quality and large - sized screen by displaying images on the monitor device. In addition to this, in the case of the present invention, since the self-support base station device makes use of the same protocol (for example, PHS protocol) as the radio communication base station for performing the transmission and reception of moving pictures with the mobile communication terminal, the user can perform the operation of video phone communication without awareness of which station (the radio communication base station or the self-support base station device) is used to route the communication.

Incidentally, in the case of the present invention, while the same protocol is used as in the radio communication base station, it is possible to provide the capability of transmitting and receiving moving pictures on the basis of a different protocol (for example, a wireless LAN) than used in the radio communication base station in accordance with the user's needs.

In the case of the above invention, it is preferred to provide a battery charger operable to hold the mobile communication terminal on the monitor device and charge the mobile communication terminal. In this case, it is possible to hold the mobile communication terminal on the monitor device and perform the video phone during charging the mobile communication terminal.

In the case of the above invention, it is preferred to further provide a content server located on a communication network, which is constructed by interconnecting communication lines , and operable to deliver content data inclusive of moving pictures; a set-top box operable to receive the content data delivered by the content server through the communication network; and a switch unit operable to selectively output the moving pictures received by the self-support base station device and the set-top box to the monitor device. In this case, it is possible to make use of the function of the set-top box of outputting and displaying content for implementing a video phone system so that a plurality of systems having redundant functions need no longer be provided, and thereby a small - footprint structure can be realized.

In the case of the above invention, it is preferred to further provide a connection processing unit operable to perform the transmission and reception of voice data with the mobile communication terminal on the basis of the communication protocol which is used between the radio communication base station and the mobile communication terminal; and a signal processing unit operable to convert the voice data transmitted and received by the connection processing unit into IP packets and vice versa and transmit and receive the IP packets through a communication network which is constructed by interconnecting communication lines . In this case, it is possible to use a low priced IP telephone service through an IP network in addition to the radio communication through the radio communication base station, and thereby the communication cost for video phone communication can be reduced.

The video phone system in accordance with the above invention is preferably provided with a relay server operable to relay IP packets transmitted and received between the mobile communication terminal and another mobile communication terminal wherein, when data is received from both the self-support base station device and the radio communication base station, the relay server selects one of the self-support base station device and the radio communication base station on the basis of the identifier and the table data in which is registered the priority order of the self-support base station device and the radio communication base station, and connects the selected one to the another mobile communication terminal. In this case, it is possible to automatically establish an arbitrary communication pathway on the basis of the settings of the user in the case where both the radio communication base station and the self-support base station device are available for communication.

### Brief Description Of The Drawings

[Fig. 1] Fig. 1 is an explanatory view for showing the overall configuration of the communication system in accordance with an embodiment.
[Fig. 2] Fig. 2 is an explanatory view for showing the overall configuration of the video phone system in accordance with the embodiment.
[Fig. 3] Fig. 3 is a functional block diagram for showing the mobile communication terminal and the self-support base station device in accordance with the embodiment.
[Fig. 4] Fig. 4 is an explanatory view for showing the data structure of the telephone number table in accordance with the embodiment.
[Fig. 5] Fig. 5 is an explanatory view for showing the data structure of the telephone number table in accordance with the embodiment.
[Fig. 6] Fig. 6 is an explanatory view for showing the data structure of the telephone number table as updated in accordance with the embodiment.
[Fig. 7] Fig. 7 is a sequence diagram showing the operation of the communication system in accordance with the embodiment.
[Fig. 8] Fig. 8 is a flow chart showing the operation when a call is received by the video phone system in accordance with the present invention.
[Fig. 9] Fig. 9 is a flow chart showing the operation when a call is transmitted by the video phone system in accordance with the present invention.

### Best Mode for Carrying Out the Invention

### (Overall Configuration Of Communication Network)

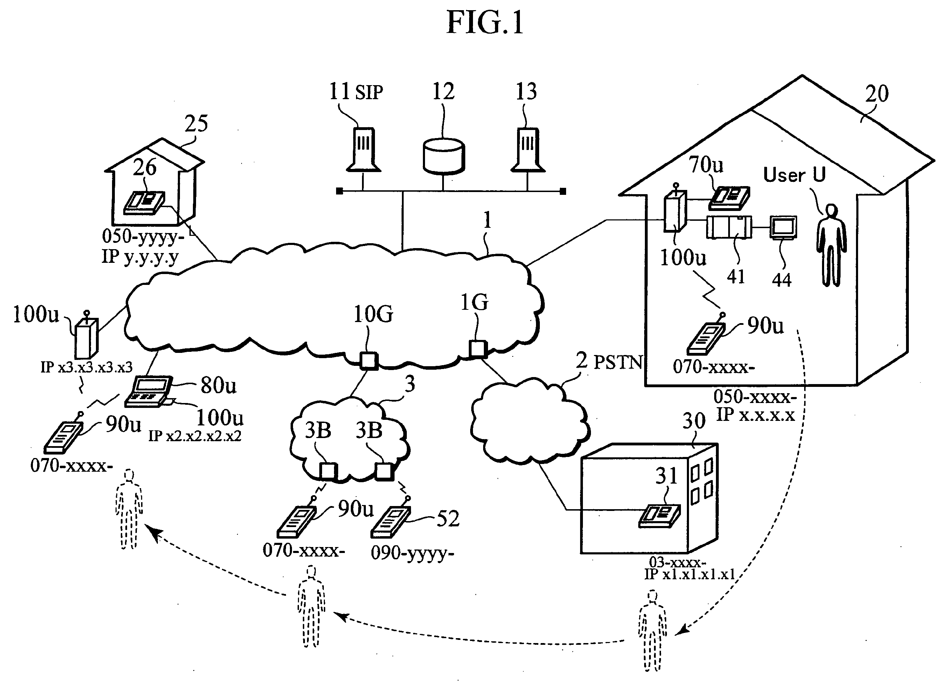

An embodiment of the present invention will be explained in conjunction with drawings. In the case of the present embodiment, it is assumed that the communication network includes mobile telephones and IP telephones, and the video phone system of the present invention is implemented within this communication network. Fig. 1 is an explanatory view for showing the overall configuration of the communication system in accordance with the present embodiment. As shown in Fig. 1, in the case of the present embodiment, an IP network 1 is connectable by the use of a mobile communication terminal 90u through a radio communication base station 3B or a self-support base station device 100u through the radio communication.

The IP network 1 is a communication network which is constructed by interconnecting communication lines such as a wired and/or wireless telephone line(s), an exclusive line(s) and the like to each other, inclusive of a LAN(s). Then, the IP network 1 is connected to a computer 80u in which is installed a software application for performing the process of connecting a call, IP telephone terminals 70u and 26 which are connected to the self-support base station device 100u and capable of performing processes such as the process of digital encoding voice band signals, and so forth.

The IP telephone terminal 70u is installed in a user's home 20 which is the domicile of a user U, and a telephone number [050 - xxxx -] is assigned thereto. In addition, the IP telephone terminal 26 is installed in a user's home 25 which is the domicile of another user, and a telephone number [050 - yyyy -] and an IP address [y.y.y.y] are assigned thereto.

Furthermore, in the case of the present embodiment, the IP network 1 is connected to a PSTN 2 which provides a telephone service using a circuit switching system through the gateway 1G for performing the conversion of predetermined signals. A fixed line telephone terminal 31 for transmitting and receiving voice band signals is connected to the PSTN 2. The fixed line telephone terminal 31 is installed in an office 30 of the user U, and a telephone number [03 - xxxx -] is assigned thereto. In addition, in the case of the present embodiment, the IP network 1 is connected to a mobile telephone network 3 for providing a mobile telephone service through the gateway 1G. The mobile communication terminals 90u and 52 are connected to the mobile telephone network 3 through the radio communication base station 3B.

The mobile communication terminal 90u is carried by the user U and can be used for performing mobile communication, and a telephone number [070 - xxxx -] is assigned thereto. In addition, the mobile telephone terminal 52 is a mobile telephone terminal which is used by the another user of the user's home 25 in which the IP telephone terminal 26 is placed, and a telephone number [090 - yyyy -] is assigned thereto.

And, in an outdoor location, the mobile communication terminal 90u serves to perform radio communication with the radio communication base station 3B in accordance with the protocol of PHS, whereas the IP network 1 can be accessed through the radio communication base station 3B via the mobile telephone network 3, such that it is possible to perform an IP telephone conversation through the IP network 1 on the basis of the VOIP technique. In addition to this, moving pictures are transmitted to and received from another mobile communication terminal 27 and the like through the radio communication base station 3B during a telephone conversation in order to provide the so - called video phone communication functionality.

That is to say, with this mobile communication terminal 90u, while radio communication with the self-support base station device 100u can be performed by the use of the PHS protocol which is the same protocol as used in the radio communication base station 3B, in the user's home 20, the IP telephone communication can be performed through the IP network 1 by accessing the IP network 1 through the self-support base station device 100u. In addition, the mobile communication terminal 90u can be used to connect with the self-support base station device 100u also through a wireless LAN such as IEEE802.11, and the IP telephone communication can be performed through this wireless LAN. The connection with the PHS or the wireless LAN is switched automatically in accordance with the communication environment (electromagnetic wave condition) or manually by user's manipulation. Incidentally, while the PHS protocol is used to perform communication with the radio communication base station in the exemplary case of the present embodiment, it is possible to use any one of a variety of techniques such as the FDMA technique, the TDMA technique, the CDMA technique or the W-CDMA technique.

The self-support base station device 100u is a modem device designed by adding a self-support base station capability on the basis of PHS and a wireless LAN capability to a dedicated terminal adapter or an IP telephone terminal, and an IP address [x.x.x.x] is assigned thereto such that the IP telephone communication can be performed with the IP telephone terminal 70u which is connected thereto. In addition, the self-support base station device 100u serves as a moving picture receiver terminal for receiving moving pictures transmitted and received between the mobile communication terminal 90u and the radio communication base station 3B, by using a communication protocol which is the same protocol as used between the radio communication base station 3B and the mobile communication terminal 90u, and the IP telephone communication can be performed with the mobile communication terminal 90u through the self-support base station device 100u. In other words, in the case of the present embodiment, the self-support base station device 100u serves to perform the equivalent functions as the radio communication base station 3B in the predetermined area in which wireless electromagnetic waves can reach, and thereby the user U can perform communication on the basis of the PHS through the self-support base station device 100u even in a location where electromagnetic waves cannot reach from the radio communication base station 3B.

In the case of the present embodiment, a call connection server is implemented by a SIP server 11, a database server 12 and a call agent 13 on the IP network 1.

The SIP server 11 is a device for performing the process of connecting a call to the mobile communication terminal 90u and so forth. In addition to this, the SIP server 11 serves to acquire information such as an IP address required for connecting a call and transmit the information to the database server 12 when the mobile communication terminal 90u is connected to the IP network 1 through the self-support base station device 100u or the computer 80u.

The database server 12 is a device for storing destination addresses (IP addresses) in association with the information about the users of the IP telephone service, telephone numbers destination. The call agent 13 is a device for performing the process of connecting a call on the basis of the information stored in the database server 12. Incidentally, in the case of a call to the mobile communication terminal 90u which is connected to the IP network 1 through the self-support base station device 100u or the computer 80u, the call agent 13 can transmit the information such as an IP address, which is required for connecting the call, to the SIP server 11. Incidentally, the respective functions provided by the SIP server 11, the database server 12 and the call agent 13 can be implemented also by an integrated hardware structure.

Furthermore, the IP network 1 is provided with a relay server 10G for relaying IP packets transmitted and received between the mobile communication terminal 90u and another VOIP supporting device through the mobile telephone network 3, and this relay server 10G is provided with the capability of converting between IP packets and voice data transmitted and received between the mobile communication terminal 90u and the radio communication base station 3B and providing the IP telephone service through the IP network 1.

This relay server 10G receives an identifier for identifying the self-support base station device 100u and/or the radio communication base station 3B from the mobile communication terminal 90u, and if it is received from both the self-support base station device 100u and the radio communication base station 3B, the relay server 10G selects one of the self-support base station device 100u and the radio communication base station 3B on the basis of the identifier as received and the table data stored in the database server 12 and connects the selected one to the another VOIP supporting device.

Incidentally, the relay server 10G of the present embodiment is provided with the capability of notifying the radio communication base station 3B of the instruction to disconnect the mobile communication terminal 90u when data is received from both the self-support base station device 100u and the radio communication base station 3B and the self-support base station device 100u is selected, while the radio communication base station 3B kills the connection with the mobile communication terminal 90u in response to this notification. By this configuration, the mobile communication terminal 90u can preferentially use the connection through the self-support base station device 100u for IP telephone conversation.

### (Configuration Of Video Phone System)

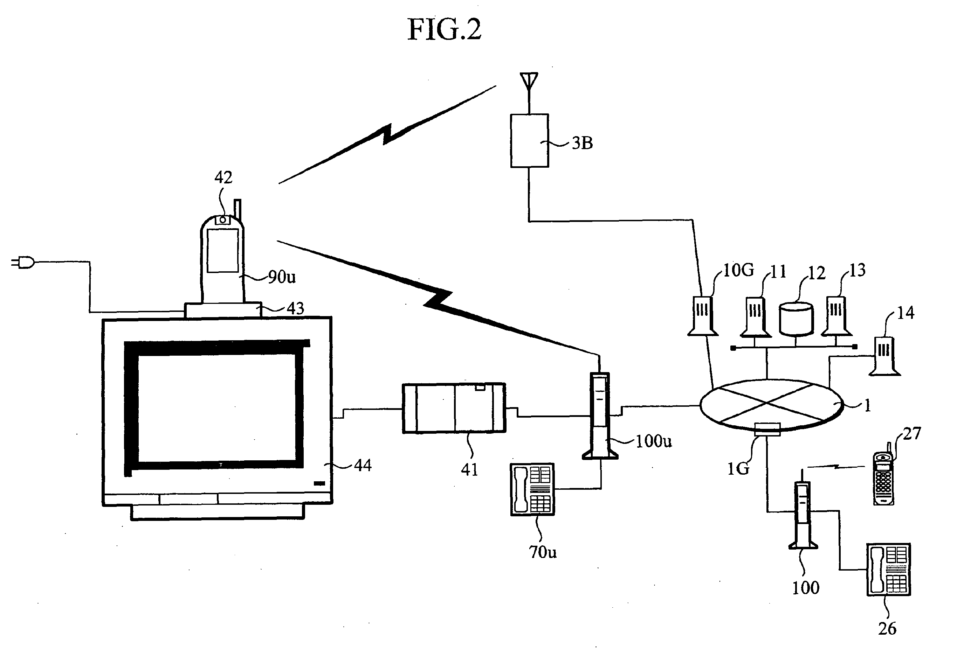

In addition to this, there is a video phone system in the user's home 20. As illustrated in Fig. 2, this video phone system includes the mobile communication terminal 90u, the self-support base station device 100u, as described above, and a monitor device 44 for displaying moving pictures which are received by the self-support base station device 100u.

The mobile communication terminal 90u is provided with a camera 42 in addition to those as described above, and makes it possible to perform the so - called video phone communication by transmitting the motion pictures captured by this camera.

The self-support base station device 100u performs the transmission and reception of voice data with the mobile communication terminal by the use of the communication protocol which is used between the radio communication base station and the mobile communication terminal, performs the conversion between IP packets and the voice data as transmitted and received, and performs the transmission and reception of the IP packet through the IP network 1. On the other hand, a set-top box 41 is a content reception device which outputs the moving picture transmitted from the mobile communication terminals 90u and the IP network 1 selectively to the monitor device 44.

The monitor device 44 may be a television receiver, the monitor of a personal computer and the like, and provided with a tuner for receiving satellite broadcast and ground wave broadcast, and in the case of the present embodiment the monitor device 44 is connected to the self-support base station device 100u through the set-top box 41 and provided with the capability of outputting video content which is delivered from a content server 14 located on the IP network 1 and received and accumulated by the set-top box 41.

In addition to this, the video phone system in accordance with the present embodiment is provided with a battery charger 43 for charging the mobile communication terminal 90u and fixedly holding the mobile communication terminal 90u on the monitor device 44. This battery charger 43 is put, for example, on the upper surface of the monitor device 44 and supplied with electric power from a homehold wall plug for charging the battery of the mobile communication terminal 90u. The mobile communication terminal 90u is detachably mountable on the battery charger 43, and provided with the capability of enabling hands free conversations in a mount state in which the mobile communication terminal 90u is being charged.

Furthermore, the video phone system in accordance with the present embodiment is provided with the set-top box 41 for receiving and accumulating content data delivered from the content server 14 through the IP network 1.

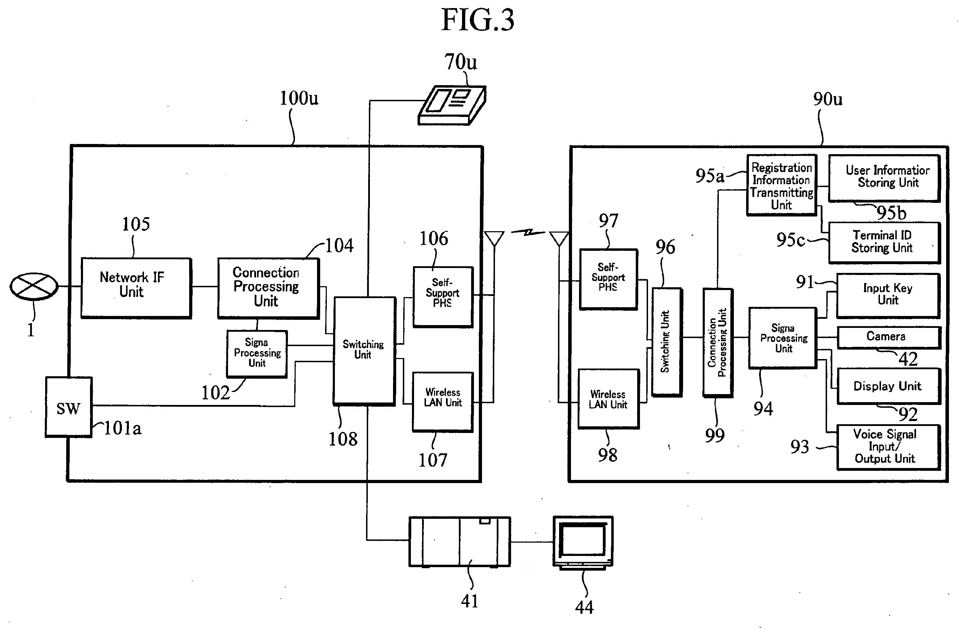

Next, with reference to Fig. 3, the configurations of the function blocks of the mobile communication terminal 90u and the function blocks of the self-support base station device 100u in accordance with the present embodiment will be explained.

As illustrated in Fig. 3, the mobile communication terminal 90u is provided with an input key unit 91, a display unit 92, a voice signal input/output unit 93, a signal processing unit 94, a connection processing unit 99 and the camera 42.

The input key unit 91 is used to input numerals such as a telephone number and desired characters. The data of numerals and characters as input through the input key unit 91 is transmitted to the signal processing unit 94. This signal processing unit 94 is connected also to the camera 42, and moving pictures captured by the camera 42 are transmitted to the signal processing unit 94.

The input key unit 91 is used to input numerals such as a telephone number and desired characters, and the signals as input are then input to the signal processing unit 94. The display unit 92 serves to display the content of the data which is input through the input key unit 91, the telephone number of the caller, the moving pictures as received from the conversation partner and so forth, and is connected to the signal processing unit 94. The voice signal input/output unit 93 is provided with a microphone and a speaker and serves to transmit and receive voice band signals to and from the signal processing unit 94.

The signal processing unit 94 serves to perform conversion between digital signals in conformity with a predetermined standard and voice band and image signals which are received from and transmitted to the voice signal input/output unit 93, the display unit 92 and the camera 42. Also, the signal processing unit 94 are connected with the input key unit 91 and the display unit 92 in order to transmit and receive data such as a telephone number. For example, the signal processing unit 94 can be implemented with a codec in compliance with ITU-TG.729a/b.

The connection processing unit 99 is a module for performing communication with the SIP server 11 when connecting directly with the radio communication base station 3B through a PHS unit 97. More specifically speaking, the connection processing unit 104 transmits to the SIP server 11 the terminal ID [U1234 - 5678], the IP address [x'.x'.x'.x'], the user ID [user_a] and the password on the basis of SIP (Session Initiation Protocol) as described above. In addition, when connecting directly with the radio communication base station 3B, the connection processing unit 99 performs the call connection process between the SIP server 11 and the mobile communication terminal 90u on the basis of SIP (Session Initiation Protocol), i.e., the processing of connecting a call at the telephone number [070 - xxxx -] used by the user U.

Furthermore, the mobile communication terminal 90u is provided with a registration information transmitting unit 95a, a user information storing unit 95b and a terminal ID storing unit 95c.

The user information storing unit 95b serves to store a user ID for identifying the user U and a password associated with the user ID. In the case of the present embodiment, the user ID [user_a] of the user U and a password associated with this user ID are stored. Also, the user ID and the password are stored in the database server 12 in association with the telephone number [070 - xxxx -] used by the user U.

When the mobile communication terminal 90u is connected with the IP network 1, the user ID and the password stored in the user information storing unit 95b are automatically transmitted to the SIP server 11 together with the terminal ID, and thereby it is possible to avoid the shortcoming that the user U has to enter information such as the user ID every time the connection is made.

When the mobile communication terminal 90u is connected with the IP network 1 which can be used for communication with the SIP server 11, the registration information transmitting unit 95a transmits to the SIP server 11 the terminal ID for identifying the mobile communication terminal 90u and the the address for identifying the location of the terminal on the IP network 1, i.e., the telephone number and the IP address for identifying the location of the mobile communication terminal 90u connected to the IP network 1.

In addition to this, the registration information transmitting unit 95a can further transmit the user ID and the password of the user U to the SIP server 11. In this case, it is determined in accordance with the security level as required whether or not the user ID and the password are transmitted in addition to the terminal ID and the IP address.

The terminal ID storing unit 95c serves as a memory from which the terminal ID (terminal identifier) assigned to the mobile communication terminal 90u is transmitted to the registration information transmitting unit 95a. In this case, the terminal ID assigned to the mobile communication terminal 90u is an identifier unique to the mobile communication terminal 90u. In the case of the present embodiment, a serial number in the form of [Uxxxx - xxxx] is used, and [U1234-5678] is assigned to the mobile communication terminal 90u. Meanwhile, the terminal ID is stored in the database server 12 in association with the telephone number [070 - xxxx -] used by the user U. Alternatively, instead of the serial number in the form of [Uxxxx - xxxx], the MAC (Media Access Control) address of the mobile communication terminal 90u can be used as the terminal ID.

The serial number is written to a FLASH memory and the like in order that it cannot be rewritten for the purpose of illegally using the IP telephone service. Accordingly, it is difficult to change the serial number, and thereby the security against the illegal usage of the IP telephone service can be improved.

Furthermore, the mobile communication terminal 90u is provided with the PHS unit 97 which is a communication interface for radio communication by the use of the communication protocol on the basis of the PHS system, a wireless LAN unit 98 which is a communication interface for local communication such as a wireless LAN, and a switching unit 96 for switching between the PHS unit 97 and the wireless LAN unit 98.

The PHS unit 97 is a module for performing radio communication by the use of the PHS protocol with the radio communication base station 3B or a self-support PHS unit 106 provided in the self-support base station device 100u. The wireless LAN unit 98 is a module for performing radio communication in compliance with IEEE802.11 and so forth with a wireless LAN unit 107 provided in the self-support base station device 100u. The connection switching unit 96 is a change - over switch for selectively connecting the PHS unit 97 or the wireless LAN unit 98 to the signal processing unit 94 on the basis of the user manipulation through the input key unit 91 and the strength of the received radio waves determined by the signal processing unit 94.

On the other hand, the self-support base station device 100u is provided with the signal processing unit 102, the connection processing unit 104 and a network IF unit 105. The signal processing unit 102 is a module for performing the conversion between IP packets and voice and image signals and outputting them in the case where the connected terminal (the IP telephone terminal 70u or the mobile communication terminal 90u) is not provided with a VOIP conversion capability.

The connection processing unit 104 is a module for communicating with the SIP server 11 through the network IF unit 105. More specifically speaking, the connection processing unit 104 transmits to the SIP server 11 the terminal ID [U1234 - 5678] of the mobile communication terminal 90u as described above, the user ID [user_a], the password and the unique IP address [x'.x'.x'.x'] of the self-support base station device 100u, on the basis of SIP (Session Initiation Protocol). Furthermore, when the IP address [x'.x'.x'.x'] as transmitted is registered in the database server 12, the connection processing unit 104 receives the information (the "expires" parameter of the SIP header) indicative of the registration effective period of the IP address from the SIP server 11. Also, the connection processing unit 104 transmits the IP address, the user ID and the password to the SIP server 11 again in advance of the expiration of the registration effective period on the basis of information on the registration effective period of the IP address as received, in order to register the IP address in the database server 12 again.

Furthermore, the connection processing unit 104 performs the call connection process between the SIP server 11 and the mobile communication terminal 90u, i.e., the processing of connecting a call at the telephone number [070 - xxxx -] used by the user U on the basis of SIP (Session Initiation Protocol). Still further, the connection processing unit 104 periodically determines whether or not the mobile communication terminal 90u is connected with the self-support base station device 100u. When the mobile communication terminal 90u is disconnected from the self-support base station device 100u, the connection processing unit 104 notifies this fact to the SIP server 11.

The network IF unit 105 is provided with an interface connectable to the IP network 1. For example, the network IF unit 105 can be implemented with a LAN interface such as 100BASE - TX in compliance with IEEE802.3u. Incidentally, an ADSL (Asymmetric Digital Subscriber Line) modem may also be used to make the connection between the IP network 1 and the self-support base station device 100u depending upon the type of the communication line used for accessing the IP network 1. Also, the network IF unit 105 is provided with the capability of connecting with the content server 14 in response to the request from the set-top box 41, receiving content data which is delivered from the content server 14, and outputting it to the set-top box 41 through a switching unit 108.

Furthermore, the self-support base station device 100u is provided with the self-support PHS unit 106 which is a communication interface for radio communication by the use of the communication protocol on the basis of the PHS system, a wireless LAN unit 107 which is a communication interface for local communication such as a wireless LAN, and a switching unit 108 for switching between the self-support PHS unit 106 and the wireless LAN unit 107. The self-support PHS unit 106 is a module for performing radio communication by the use of the PHS protocol with the PHS unit 97 provided in the mobile communication terminal 90u. The wireless LAN unit 107 is a module for performing wireless communication in compliance with IEEE802.11 and so forth with the wireless LAN unit 98 provided in the mobile communication terminal 90u.

The switching unit 108 is a change - over switch for selectively connecting the self-support PHS unit 106 or the wireless LAN unit 107 to the connection processing unit 104 and the network IF unit 105 on the basis of the user manipulation through the switch 101a and the strength of the received radio waves determined by the self-support PHS unit 106 or the wireless LAN unit 107. On the other hand, the connection switching unit 108 is provided with the capability of connecting the IP telephone terminal 70u to the connection processing unit 104 and the signal processing unit 102 if there is a sending or receiving event at the self-support base station device 100u when the mobile communication terminal 90u is not connected to the self-support base station device 100u. Furthermore, the connection switching unit 108 is provided with the capability of switching between the moving pictures as received from the mobile communication terminal 90u and the moving pictures as delivered from the content server 14 in response to a request from the set-top box 41 and outputs them to the set-top box 41.

### (Outline Of The Operation Of The Communication System)

Next, the general outline of the communication system in accordance with the present embodiment as described above will be explained with reference to Fig. 1.

For example, in the case where the user of the another user's home 25 makes a call from the IP telephone terminal 26 to the IP telephone terminal 70u used by the user U and placed in the user's home 25, at first, the call agent 13 receives the telephone number [050 - xxxx -] assigned to the IP telephone terminal 70u from the IP telephone terminal 26 together with the IP address [y.y.y.y]. Then, the call agent 13 refers to the database server 12 on the basis of the telephone number [050 - xxxx -] as received.

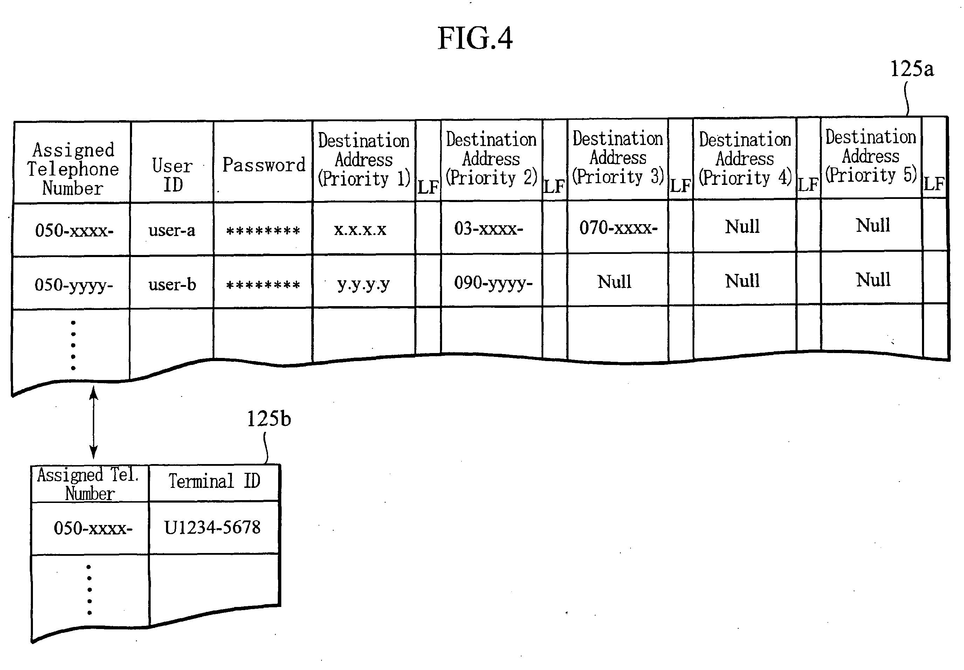

In this case, for example, the database server 12 stores information as shown in telephone number tables 125a and 125b of Fig. 4. The call agent 13 acquires the IP address [x.x.x.x] which is an entry of "Destination address (Priority 1)" in the telephone number table 125a corresponding to [050- xxxx -] which is an entry of "Assigned Telephone Number". The call agent 13 connects the IP telephone terminal 26 and the IP telephone terminal 70u on the basis of the IP address [x.x.x.x] as acquired from the database server 12 and the IP address [y.y.y.y] as received from the IP telephone terminal 26.

In addition to this, the database server 12 of the present embodiment can store the telephone numbers of forwarding addresses to which calls at predetermined telephone numbers are transferred. For example, in the telephone number table 125a, the assigned telephone number [050 - xxxx -] is associated with the IP address [x.x.x.x] stored as an entry of "Destination address (Priority 1)" as described above and also with the telephone number [070 - xxxx -] of the mobile communication terminal 90u carried by the user U as an entry of "Destination address (Priority 3)".

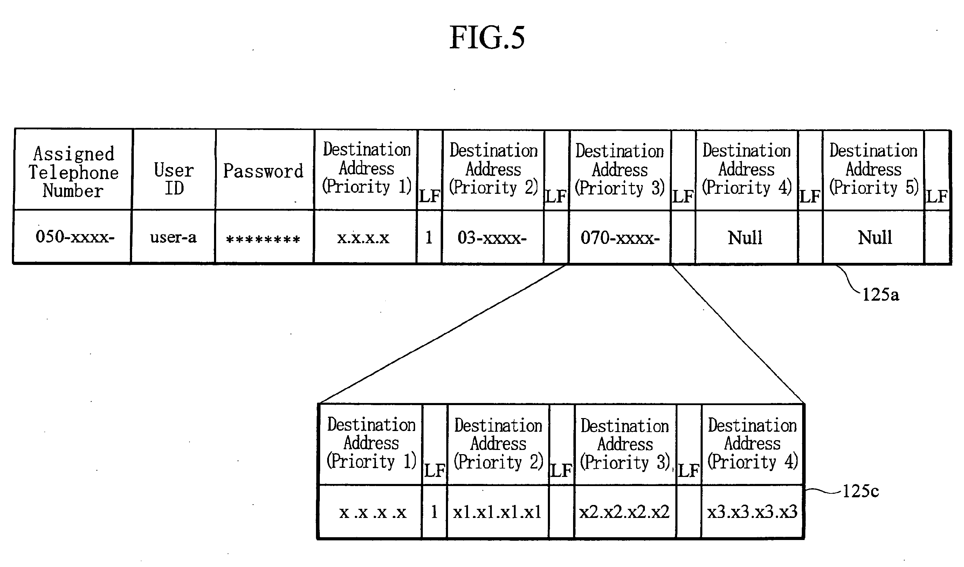

In the case of the present embodiment, as illustrated in Fig. 5, this telephone table 125a is made up in a layered structure including lower table data 125c corresponding to the assigned telephone number [070 - xxxx -], and the lower table data 125c contains the IP addresses of the self-support base station devices 100u connectable to the mobile communication terminal 90u. For example, the IP address [x1.x1.x1.x1] of the self-support base station device 100u placed in the office 30 of the user U is stored as "Destination address (Priority 2)", and the IP address [x2.x2.x2.x2] of the self-support base station device 100u connected to the personal computer 80u used by the user U is stored as "Destination address (Priority 2)". Incidentally, the user U can store the telephone number of the ordinary telephone terminal 31 or the telephone number of the mobile telephone terminal 90u in the database server 12 through the Internet and the like.

In the case where a plurality of destination addresses are stored in the database server 12, the call agent 13 can connect a call at the assigned telephone number ([050 - xxxx -]) on the basis of the priority order of the destination addresses.

For example, while the call agent 13 is capable of calling the IP telephone terminal 70u on the basis of the IP address [x.x.x.x] stored as "Destination address (Priority 1)", if the IP telephone terminal 70u returns no response to the call from the call agent 13 within a predetermined time period, the call agent 13 halts calling the IP telephone terminal 70u and can call the ordinary telephone terminal 31 at the telephone number [03 - xxxx -] which is stored as "Destination address (Priority 2)".

Furthermore, when calling the mobile communication terminal 90u, the call agent 13 makes a call at the telephone number [070 - xxxx -] by the use of the PHS system to the mobile communication terminal 90u, and if no response is returned within a predetermined time period, the IP addresses of the respective self-support base station devices 100u are used in turn for making an IP telephone call. Meanwhile, the user U can change the priority order of a plurality of the "destination addresses" stored in the database server 12 in accordance with the time of day by further storing predetermined information in the database server 12.

By the operations of the database server 12 and the call agent 13 as has been discussed above, it is possible to transfer a call at the telephone number [050 - xxxx -] used by the user U to a predetermined telephone terminal in accordance with the location where the user U stays.

Furthermore, in the case of the present embodiment, when the user U connects the mobile communication terminal 90u to the IP network 1 through one of the self-support base station devices 100u, the IP address assigned to that self-support base station device 100u is set through the SIP server 11 as an entry of "Destination address" stored in the database server 12 as described above.

Accordingly, the user U can receive a call at the telephone number [050 - xxxx -], for example even when traveling and so forth, through the use of the self-support base station device 100u and the mobile communication terminal 90u without changing "Destination address" stored in the database server 12 by himself by connecting the mobile communication terminal 90u to the IP network 1 through the self-support base station device 100u.

Since the communication system in accordance with the present embodiment operates as has been discussed above, the user U can selectively use two telephone terminals, i.e., the IP telephone terminal 70u and the mobile communication terminal 90u which are associated with the same telephone number [050 - xxxx -] without performing the change of "Destination address" and so forth.

Particularly, in the case of the present embodiment, the self-support base station device 100u is used to perform a communication with the mobile communication terminal 90u on the basis of the PHS system, and thereby the user can make an IP telephone call at the PHS telephone number assigned to the mobile communication terminal 90u. Also, in the case where an antenna adapter is used as the self-support base station device 100u which is removably attached to the computer 80u, it is possible to make use of the PHS telephone in the same manner as usual by carrying this antenna adapter and providing the self-support PHS antenna station even in the location where radio waves cannot reach from the radio communication base station 3B, such as an abroad location, as long as there is a personal computer available for connecting with the IP network 1.

### (Communication Method Utilizing The Communication System)

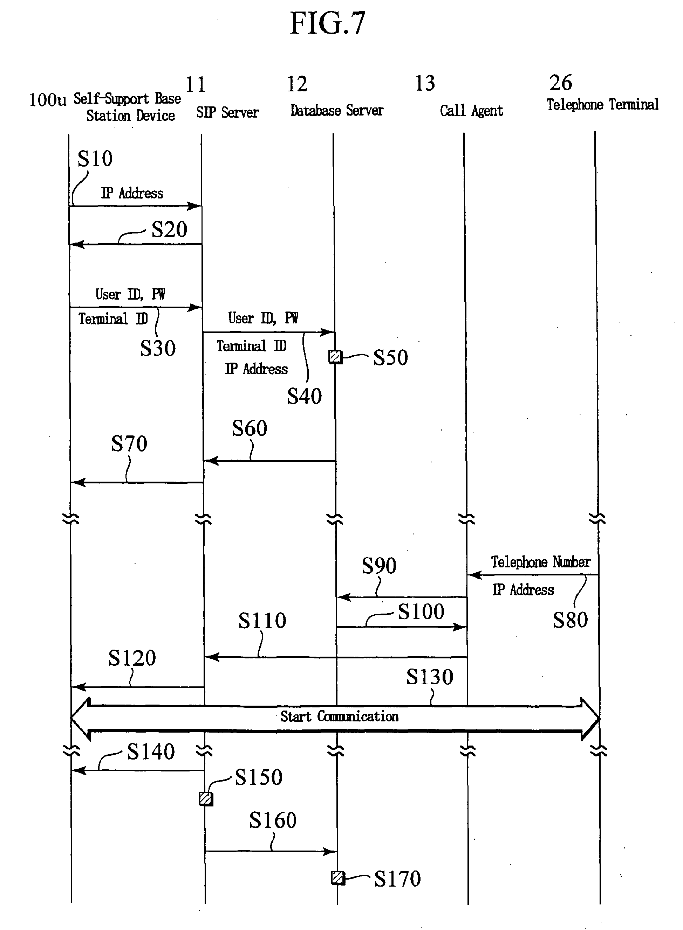

Next, the communication method of the communication system in accordance with the present embodiment will be explained with reference to Fig. 7. Fig. 7 is a sequence diagram showing the operation of the communication system in accordance with the present embodiment.

At first, when the mobile communication terminal 90u is connected to the personal self-support base station device 100u connected with the IP network 1, the personal self-support base station device 100u transmits [070 - xxxx -] assigned to the mobile communication terminal 90u to the SIP server 11 together with the IP address [x'.x'.x'.x'] assigned to the personal self-support base station device 100u by the use of the "REGISTER" message of SIP in step S10. After receiving the "REGISTER" message, the SIP server 11 transmits a challenge value on the basis of MD5 or the like algorithm in step S20.

When the challenge value is received, the personal self-support base station device 100u transmits to the SIP server 11 a value calculated in accordance with MD5 or the like algorithm in step S30 on the basis of the user ID [user_a], the password associated with the user ID and the terminal ID [U1234 - 5678] stored in the mobile communication terminal 90u.

Next, the SIP server 11 transmits the user ID [user_a], the password, the terminal ID [U1234 - 5678], the telephone number [070 - xxxx -] and the IP address [x.x.x.x], as received from the personal self-support base station device 100u, to the database server 12 in step S40.

The database server 12 authenticates the mobile communication terminal 90u on the basis of information as received from the SIP server 11 and information stored in the database server 12, and changes the entry in "Destination address (Priority 1)" to [070 - xxxx -] and the entry in "Destination address (Priority 1)" of the lower table data 125c to the IP address [x'.x'.x'.x'] in step S50.

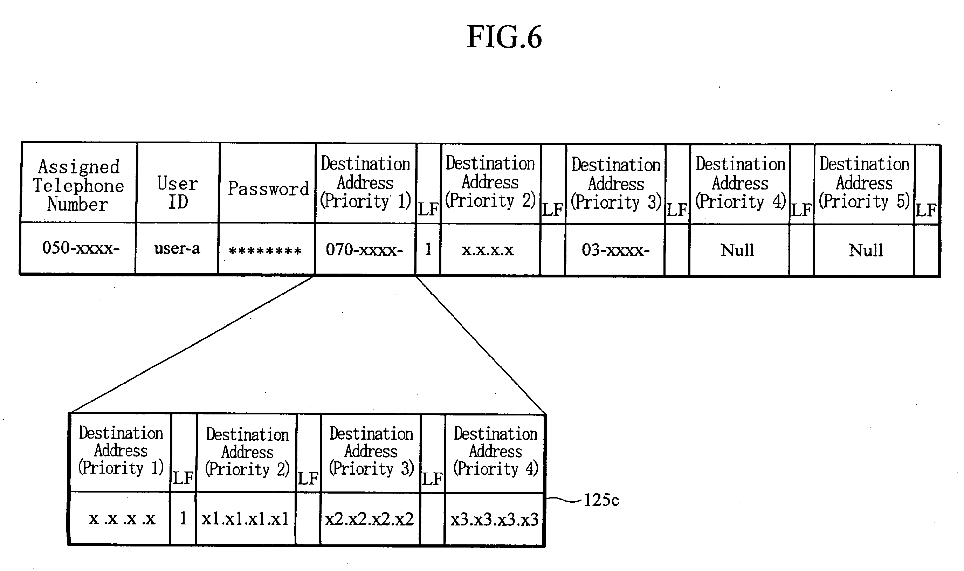

Next, the database server 12 notifies the SIP server 11 that the mobile communication terminal 90u is authenticated and that the entries of "Destination address (Priority 1)" are updated in step S60. The SIP server 11 notifies the personal self-support base station device 100u that the registration is completed on the basis of the database server 12 in step S70. Also, the SIP server 11 notifies the registration effective period of the telephone number [070 - xxxx -] and the registration effective period of the IP address [x'.x'.x'.x'] with reference to the "expires" parameter of the SIP header. When the above process is completed, the telephone number [050 - xxxx -] stored in the database server 12 is changed as illustrated in Fig. 6.

Next, further with reference to Fig. 5, the process of connecting a call to the mobile communication terminal 90u will be explained. For example, in the case where the IP telephone terminal 26 makes a call at the telephone number [050- xxxx -], the call agent 13 receives the telephone number and the IP address [y.y.y.y] of the IP telephone terminal 26 from the IP telephone terminal 26 in step S80. Then, the call agent 13 refers to the information stored in the database server 12 on the basis of the telephone number [050 - xxxx -] as received in step S90. At this time, the call agent 13 acquires the telephone number [070 - xxxx -] and the IP address [x' .x' .x' .x'] which are associated with the telephone number [050 - xxxx -], and recognizes that the IP address is assigned to the personal self-support base station device 100u since "LF" is set to "1" as illustrated in Fig. 6 in step S100.

The call agent 13 therefore transmits the IP address [x'.x'.x'.x'] and the IP address [y.y.y.y] of the IP telephone terminal 26 to the SIP server 11 in step S110. The SIP server 11 connects a call from the IP telephone terminal 26 to the mobile communication terminal 90u on the basis of the information as received from the call agent 13 in step S120. Thereafter, the IP telephone terminal 26 and the mobile communication terminal 90u start communication therebetween in step S130.

Next is a description of the process to be taken when the mobile communication terminal 90u is disconnected from the personal self-support base station device 100u connected to the IP network 1.

If there is no reregistration of the IP address by the personal self-support base station device 100u even after the expiration of the registration effective period of the telephone number [070 - xxxx -] as notified to the computer 80u in step S70, the mobile communication terminal 90u connected to the personal self-support base station device 100u is called by the SIP server 11 in step S140.

When the mobile communication terminal 90u returns no response to the call in step S140, the SIP server 11 determines that the personal self-support base station device 100u is disconnected from the IP network 1 in step S150. Meanwhile, in the case where only the mobile communication terminal 90u is disconnected from the computer 80u, the personal self-support base station device 100u can notify the SIP server 11 that the mobile communication terminal 90u is disconnected in accordance with SIP.

As a result of the determination in step S150 or on the basis of the notification from the personal self-support base station device 100u that the mobile communication terminal 90u is disconnected, the SIP server 11 notifies the database server 12 that the mobile communication terminal 90u or the personal self-support base station device 100u is disconnected in step S160. On the basis of the notification from the SIP server 11, the association between the telephone number [050 - xxxx -] and the priority destination address of the telephone number [050 - xxxx -], i.e., the telephone number [070 - xxxx -] is released in the database server 12 in step S170.

When the process in step S170 is completed, the information stored in the database server 12 is changed as illustrated in Fig. 4.

In accordance with the communication system and the communication method of the present embodiment, a call at the telephone number [050 - xxxx -] of the user U is connected to the mobile communication terminal 90u on the basis of the IP address [x'.x'.x'.x'] as transmitted from the mobile communication terminal 90u, and thereby the user U can receive the call at the telephone number [050- xxxx -] with the mobile communication terminal 90u.

In accordance with the present embodiment, since the IP address [x'.x'.x'.x'] as transmitted from the personal self-support base station device 100u is automatically set as a priority destination address accorded priority over the destination addresses which have been stored in the database server 12 in advance, it is possible to avoid the shortcoming that the user U has to manually change the destination address. Namely, the user U can selectively utilize two telephone terminals, to which the same telephone number [050 - xxxx -] is assigned, i.e., the IP telephone terminal 70u and the mobile communication terminal 90u, without performing the change of "Destination address" and so forth.

In the case of the present embodiment, since the mobile communication terminal 90u is authenticated on the basis of the terminal ID as transmitted from the mobile communication terminal 90u and the terminal ID as stored in the database server 12, it is possible to determine whether or not a service is to be provided for the mobile communication terminal 90u without the use of the user ID and the password of the user U.

In the case of the present embodiment, when the SIP server 11 detects that the mobile communication terminal 90u is disconnected from the computer 80u or that the personal self-support base station device 100u is disconnected from the IP network 1, the priority destination address as set is deregistered, and thereby the call agent 13 can connect a call at the telephone number [050 - xxxx -] on the basis of the destination addresses which are prepared in the database server 12 in the case where the mobile communication terminal 90u or the personal computer 80u is disconnected from the IP network 1.

In the case of the present embodiment, the mobile communication terminal 90u is authenticated on the basis of the user ID and the password in addition to the terminal ID as transmitted from the mobile communication terminal 90u, and thereby it is possible to improve the security against the illegal usage of the service.

Also, in the case of the present embodiment, since the mobile communication terminal 90u is provided further with the terminal ID storing unit 95c capable only of reading the terminal ID while the registration information transmitting unit 73 transmits the terminal ID as read from the terminal ID storing unit 95c, it is possible to prevent the terminal ID from being changed by the user and so forth, and improve the security against the illegal usage of the service.

Furthermore, in the case of the present embodiment, since the personal self-support base station device 100u is provided further with the user information storing unit 72 capable of storing the user ID and the password while the registration information transmitting unit 73 transmits the user ID and the password as stored in the terminal ID storing unit and the user information storing unit 72, it is possible to avoid the shortcoming that the user U has to enter the user ID and the password every time the connection is made.

### (Outline Of The Operation Of The Video Phone System)

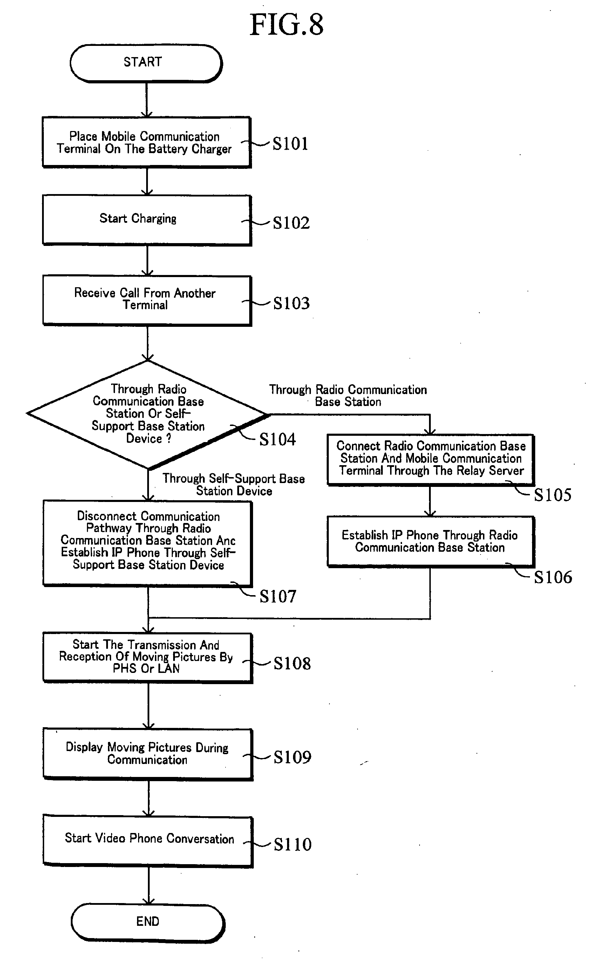

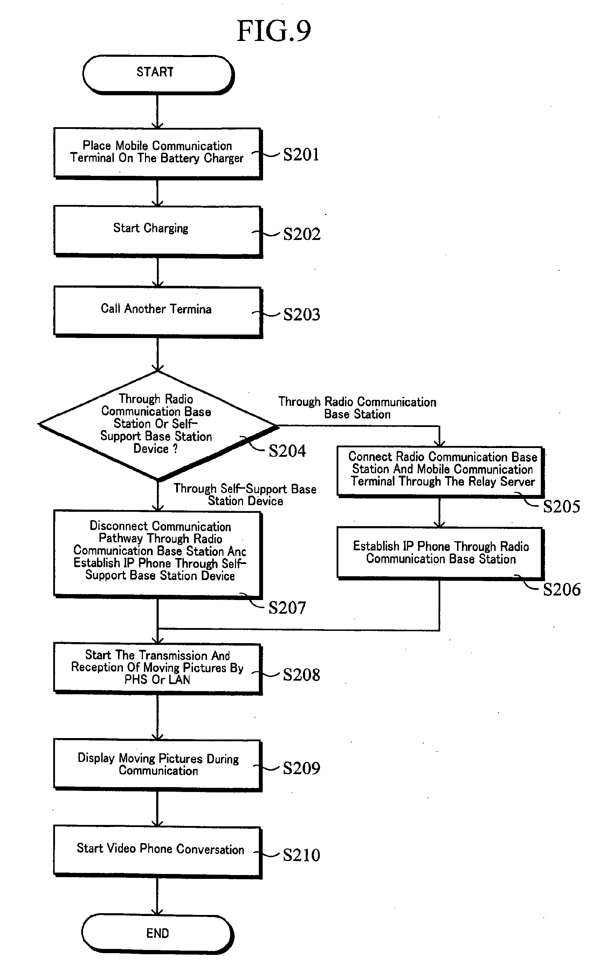

Next, the operation of the video phone system will be explained in response to Fig. 8 and Fig. 9. Incidentally, an example will be explained on the assumption that the user U is in the user's home 20, and that the user U performs video phone communication with the another mobile communication terminal 27 equipped with the video phone communication capability by the use of the mobile communication terminal 90u.

### (1) Call Reception Process

First is the explanation of the case where there is a call from the another mobile communication terminal 27. As shown in Fig. 8, charging the mobile communication terminal 90u is started by mounting the mobile communication terminal 90u on the battery charger 43 in steps S101 and S102. On the other hand, the calling process is performed by the another mobile communication terminal 27, and then the call reception process is started by the mobile communication terminal 90u in step S103. Incidentally, in this example, since the mobile communication terminal 90u is capable of communicating with any one of the radio communication base station 3B and the self-support base station device 100u, the mobile communication terminal 90u is capable of performing the call reception process through any one of the radio communication base station 3B and the self-support base station device 100u so that it is determined which of the radio communication base station 3B and the self-support base station device 100u is used to establish a communication pathway in step S104.

In the case of the present embodiment, it is assumed that the priority of the self-support base station device 100u is registered in the table 125a for connection when there are both calls at the radio communication base station 3B and the self-support base station device 100u. Accordingly, in step S104, it is determined with reference to the table 125a that the connection is established through the self-support base station device 100u, and the process proceeds to step S107. In step S107, the communication pathway through the radio communication base station is disconnected by the relay server 10G, and the SIP server 11 connects the mobile communication terminal 27 and the self-support base station device 100u.

Meanwhile, the determination process in step S104 is followed by steps S105 and S106 in order to establish the communication pathway through the radio communication base station in the case, for example, where the communication pathway through the radio communication base station is given priority or where communication cannot be established between the mobile communication terminal 90u and the self-support base station device 100u. In other words, the radio communication base station and the mobile communication terminal 27 are connected with each other through the relay server 10G in step S105, and the IP telephone communication is established through the radio communication base station in step S106.

Then, after establishing the communication between the mobile communication terminal 90u and the mobile communication terminal 27, the self-support base station device 100u establishes communication with the mobile communication terminal 90u by the self-support PHS unit 106 or 97 or the wireless LAN unit 107 or 98 in order to start the transmission and reception of moving pictures in step S108. Next, on the basis of the user manipulation through the set-top box 41, the connection switching unit 108 switches pictures (inclusive of voice) to be output to the monitor device 44. Namely, when the set-top box 41 is outputting pictures delivered from the content server 14 through the IP network 1, the output path is switched in order to output the moving pictures of the video phone communication as received from the mobile communication terminal 90u to the monitor device 44 through the set-top box 41. By this configuration, the video phone communication is established between the mobile communication terminal 90u and the mobile communication terminal 27 in step S110.

### (2) Calling Process

Next is the explanation of the case where a call is made to the another mobile communication terminal 27. As illustrated in Fig. 9, the mobile communication terminal 90u is first mounted on the battery charger 43 to start charging the mobile communication terminal 90u in steps S201 and S202. Then, the calling process is performed by the manipulation of the mobile communication terminal 90u to call the another mobile communication terminal 27 in step S203. Meanwhile, in this example, since the mobile communication terminal 90u is capable of communicating with any one of the radio communication base station 3B and the self-support base station device 100u, the mobile communication terminal 90u is capable of performing the calling process through any one of the radio communication base station 3B and the self-support base station device 100u so that it is determined which of the radio communication base station 3B and the self-support base station device 100u is used to establish a communication pathway in step S204.

In the case of the present embodiment, it is assumed that the priority of the self-support base station device 100u is registered in the table 125a for connection when the calling process is performed to both the radio communication base station 3B and the self-support base station device 100u. Accordingly, in step S104, it is determined with reference to the table 125a that the connection is established through the self-support base station device 100u, and the process proceeds to step S107. In step S207, the communication pathway through the radio communication base station is disconnected by the relay server 10G, and the SIP server 11 connects the mobile communication terminal 27 and the self-support base station device 100u.

Meanwhile, the determination process in step S204 is followed by steps S205 and S206 in order to establish the communication pathway through the radio communication base station in the case, for example, where the communication pathway through the radio communication base station is given priority or where communication cannot be established between the mobile communication terminal 90u and the self-support base station device 100u. In other words, the radio communication base station and the mobile communication terminal 27 are connected with each other through the relay server 10G in step S205, and the IP telephone communication is established through the radio communication base station in step S206.

Then, after establishing the communication between the mobile communication terminal 90u and the mobile communication terminal 27, the self-support base station device 100u establishes communication with the mobile communication terminal 90u by the self-support PHS unit 106 or 97 or the wireless LAN unit 107 or 98 in order to start the transmission and reception of moving pictures in step S208. Next, on the basis of the user manipulation through the set-top box 41, the connection switching unit 108 switches pictures (inclusive of voice) to be output to the monitor device 44. Namely, when the set-top box 41 is outputting pictures delivered from the content server 14 through the IP network 1, the output path is switched in order to output the moving pictures of the video phone communication as received from the mobile communication terminal 90u to the monitor device 44 through the set-top box 41 in step S209. By this configuration, the video phone communication is established between the mobile communication terminal 90u and the mobile communication terminal 27 in step S210.

### (Actions And Effects Of The Video Phone System)

As has been discussed above, with the video phone system in accordance with the present embodiment, it is possible to output the moving pictures transmitted and received between the mobile communication terminal 90u and the radio communication base station 3B to the monitor device 44 through the self-support base station device 100u, and realize a video phone system with a high - quality and large - sized screen by displaying images on the monitor device 44.

Also, in the case of the present embodiment, since the self-support base station device 100u makes use of the same PHS protocol as the radio communication base station 3B for performing the transmission and reception of moving pictures with the mobile communication terminal 90u, the user can perform the operation of video phone communication without awareness of which station (the radio communication base station or the self-support base station device) is used to route the communication.

On the other hand, in the case of the present embodiment, a wireless LAN which is a different protocol than used in the radio communication base station 3B can be used for transmitting and receiving moving pictures in place of the PHS protocol which is the same as used in the radio communication base station, and thereby it is possible to select an appropriate communication protocol in accordance with the communication environment.

Since there is the battery charger 43 provided for holding the mobile communication terminal 90u on the monitor device 44 and charging the mobile communication terminal 90u in the case of the present embodiment, it is possible to easily hold the mobile communication terminal 90u on the monitor device 44 and charge the mobile communication terminal 90u during performing video phone communication.

In addition to this, in the case of the present embodiment, since there is the set-top box provided for receiving the content data delivered from the content server 14 through the IP network 1 and the moving pictures, which are received by the self-support base station device 100u or the set-top box 41 to the monitor device 44, are selectively output, it is possible to make use of the function of the set-top box 41 of outputting and displaying content for implementing a video phone system so that a plurality of systems having redundant functions need no longer be provided, and thereby a small-footprint structure can be realized.

In the case of the embodiment as described above, it is possible to use a low priced IP telephone service through the IP network 1 by the connection processing unit 104 and the signal processing unit 102, which are provided in the self-support base station device 100u, in addition to the radio communication through the radio communication base station 3B, and thereby the communication cost for video phone communication can be reduced.

Furthermore, in the case of the present embodiment, the telephone number tables 125a and 125b are stored in the database server 12 for registering the priority order of the self-support base station device 100u and the radio communication base station 3B, and if data is received from both the self-support base station device 100u and the radio communication base station 3B, one of the self-support base station device 100u and the radio communication base station 3B is selected on the basis of the identifier and the telephone number tables 125a and 125b and connects the selected one to the another mobile communication terminal 27, so that it is possible to automatically establish an arbitrary communication pathway on the basis of the settings of the user in the case where both the radio communication base station 3B and the self-support base station device 100u are available for communication.

### INDUSTRIAL APPLICABILITY

As has been discussed above, in accordance with the present invention, video phone communication can be performed by displaying the moving pictures captured by the camera provided of a mobile communication terminal such as a mobile telephone, a PHS or a PDA on a monitor device such as a television receiver.

## Claims

1. A video phone system comprising: a mobile communication terminal having a capability of performing the transmission and reception of moving pictures, which are captured, and a conversation with a radio communication base station; a self-support base station device operable to receive said moving pictures transmitted to and received from said radio communication base station on the basis of a communication protocol which is used between said radio communication base station and said mobile communication terminal; and a monitor device operable to display the moving pictures received by said self-support base station device.

2. The video phone system as claimed in claim 1 further comprising a battery charger operable to hold said mobile communication terminal on said monitor device and charge said mobile communication terminal.

3. The video phone system as claimed in claim 1 further comprising a content server located on a communication network, which is constructed by interconnecting communication lines , and operable to deliver content data inclusive of moving pictures; a set-top box operable to receive said content data delivered by said content server through said communication network; and a switch unit operable to selectively output the moving pictures received by said self-support base station device and said set-top box to said monitor device.

4. The video phone system as claimed in claim 1 further comprising: a connection processing unit operable to perform the transmission and reception of voice data with said mobile communication terminal on the basis of the communication protocol which is used between said radio communication base station and said mobile communication terminal; and a signal processing unit operable to convert the voice data transmitted and received by said connection processing unit into IP packets and vice versa and transmit and receive the IP packets through a communication network which is constructed by interconnecting communication lines.

5. The video phone system as claimed in claim 1 further comprising: a relay server located on said communication network operable to relay IP packets transmitted and received between said mobile communication terminal and another mobile communication terminal wherein, when data is received from both said self-support base station device and said radio communication base station, said relay server selects one of said self-support base station device and said radio communication base station on the basis of the identifier and said table data in which is registered the priority order of said self-support base station device and said radio communication base station, and connects the selected one to said another mobile communication terminal.

6. A self-support base station device capable of communicating with a mobile communication terminal having a capability of performing the transmission and reception of moving pictures, which are captured, and a conversation with a radio communication base station; a communication unit operable to receive said moving pictures transmitted to and received from said radio communication base station on the basis of a communication protocol which is used between said radio communication base station and said mobile communication terminal; and an interface operable to output the moving pictures received by a moving picture receiver terminal to the monitor device.

7. The self-support base station device as claimed in claim 6 further comprising: a connection processing unit operable to perform the transmission and reception of voice data with said mobile communication terminal on the basis of the communication protocol which is used between said radio communication base station and said mobile communication terminal; and a signal processing unit operable to convert the voice data transmitted and received by said connection processing unit into IP packets and vice versa and transmit and receive the IP packets through a communication network which is constructed by interconnecting communication lines .

8. A set-top box operable to receive content data inclusive of moving pictures delivered through a communication network, which is constructed by interconnecting communication lines, and output the content data to a monitor device, wherein said set-top box receives the content data through said communication network, acquires moving pictures transmitted and received by a mobile communication terminal having a capability of performing the transmission and reception of the moving pictures, which are captured, and a conversation with a radio communication base station, and selectively outputs these moving pictures as acquired or the moving pictures received by said content reception device to said monitor device.

9. A video phone method implemented by making use of a mobile communication terminal having a capability of performing the transmission and reception of moving pictures, which are captured, and a conversation with a radio communication base station, said video phone method comprising: a step (1) of receiving, by a self-support base station device, said moving pictures transmitted to and received from said radio communication base station on the basis of a communication protocol which is used between said radio communication base station and said mobile communication terminal, and a step (2) of displaying the moving pictures received in said step (1) on a monitor device.

10. The video phone method as claimed in claim 9 further comprising a step (3) of receiving content data inclusive of moving pictures delivered through a communication network, which is constructed by interconnecting communication lines , wherein the moving pictures as received in said step (1) and said step (3) are selectively output to said monitor device in said step (2).

11. The video phone method as claimed in claim 9 further comprising: a step (4) of transmitting and receiving voice data between said self-support base station device and said mobile communication terminal on the basis of the communication protocol which is used between said radio communication base station and said mobile communication terminal; and a step (5) of converting the voice data transmitted and received by said mobile communication terminal into IP packets and vice versa and transmitting and receiving the IP packets through a communication network which is constructed by interconnecting communication lines.

12. The video phone method as claimed in claim 9 further comprising: a step (6) of converting the voice data transmitted and received between said mobile communication terminal and said radio communication base station into IP packets and vice versa and relaying IP packets transmitted and received by another mobile communication terminal.

13. The video phone method as claimed in claim 12 wherein, in said step (6), the priority order of the communication pathways through said radio communication base station and said self-support base station device is registered; an identifier for identifying each of the respective communication pathways is acquired; when there is a call from each of a plurality of communication pathways, a communication pathway is selected on the basis of said identifier and said priority order in order to connect with the selected communication pathway to the another mobile communication terminal.
